# EUROPEAN PATENT SPECIFICATION

(11) **EP 1 681 489 B1**
(45) Date of publication and mention of the grant of the patent: **24.06.2009**
(21) Application number: 06000541.0
(22) Date of filing: 12.01.2006
(51) Int. Cl.: F16D 69/02

(54) **Braking element**
Bremselement
Elément de freinage

(30) Priority: 12.01.2005 US 34212
(43) Date of publication of application: 19.07.2006
(73) Proprietor: Akebono Corporation, Farmington Hills, Michigan 48331 (US)
(72) Inventor: Kesavan, Sunil, Farmington Hills Michigan 48335 (US); Shao, Xinming, East Novi, MI 48375 (US)
(74) Representative: Müller, Thomas Michael

(56) References cited:
- EP-A- 1 443 237
- PATENT ABSTRACTS OF JAPAN vol. 006, no. 044 (C-095), 19 March 1982 (1982-03-19) & JP 56 161428 A (AISIN SEIKI CO LTD; others: 01), 11 December 1981 (1981-12-11)

## Description

### FIELD OF THE INVENTION

The present invention relates to a braking element comprising a friction material.

### BACKGROUND OF THE INVENTION

Friction materials are typically employed to convert kinetic energy of a moving vehicle or a machine part into heat to slow the movement of the vehicle or the machine part. Typically, the friction material absorbs the heat and gradually dissipates it into the atmosphere. The friction material is converted into wear debris during brake use and can be considered the expendable portion of a brake system.

The brake system must satisfy a certain set of consumer expectations, such as comfort, durability, and reasonable cost. These expectations are translated into a set of specific requirements for the brake system such as a high and stable friction coefficient, vibration and noise characteristics within a predetermined limit, and low wear rates for the friction material and a rotor, a drum or a clutch mating surface. All of the aforesaid requirements have to be achieved simultaneously at a reasonable cost. Particularly, the performance has to be stable under varying application conditions, over extremes in temperature, humidity, speed, and deceleration rates.

While the brake system must satisfy consumer expectations, the brake system must also satisfy domestic and/or international regulations. Future legislation in various countries may be concerned with reduction of copper levels in the environment. One such contributor of copper can be the wear debris from the traditional friction materials.

EP 1 443 237 A1 shows a braking element comprising a friction material, wherein the friction material being entirely devoid of carbon steel. In a exemplary composition, the friction material contains among others iron fibers and is devoid of any copper.

EP 1 031 754 A1 discloses as exemplary composition a friction material comprising iron fibers, aluminum powder or fiber wherein the amount of aluminum powder or fiber is in a range between about 1 vol. % to about 5 vol. % and wherein the friction material is free of copper. Such a friction material is also disclosed in US 2001/0027073 A.

### SUMMARY OF THE INVENTION

A braking element comprising a friction material including iron fibers, and at least one of an aluminum powder or fiber, tin, and a combination of aluminum powder or fiber and tin, wherein an amount of said iron fibers in said friction material is in a range between about 1 v % to about 10 v %; wherein any aluminum powder includes a largest diameter of about 1.5 mm, any aluminum fiber includes a length between about 0.64 mm and about 1.3 mm and a width in a range between about 20 micrometers and about 80 micrometers and an amount of at least one of said aluminum powder or fiber, said tin, and said combination aluminum powder or fiber and tin is in a range between about 1 v % to about 5 v %; and wherein said friction material is free of copper.

Further areas of applicability of the present invention will become apparent from the drawings, the appended claims and below provided detailed description. It should be understood that the detailed description and specific examples, while indicating the various embodiments of the invention, are intended for purposes of illustration and example only and are not intended to limit the scope of the invention.

### BRIEF DESCRIPTION OF THE DRAWINGS

The present invention will become more fully understood from the detailed description, the appended claims and the accompanying drawings, wherein:

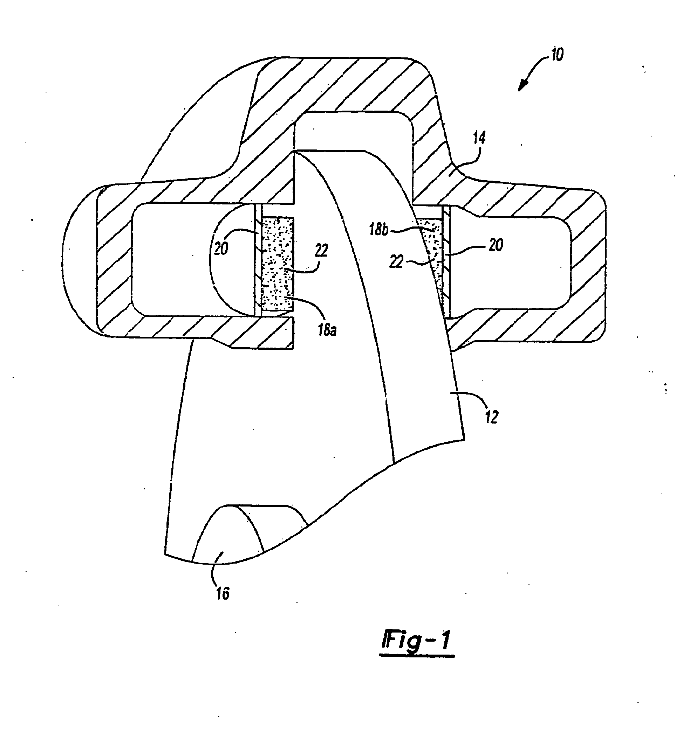

Figure 1 is a cross-sectional view of a disc brake system.

### DETAILED DESCRIPTION OF THE VARIOUS EMBODIMENTS

In Figure 1, the present invention is shown with reference to a simplified and exemplary vehicle disc brake system 10. The disc brake system 10 includes a rotor 12, a caliper 14, and a hub 16. The disc brake system 10 also includes a pair of outboard and inboard brake elements 18a and 18b, respectively, referred to hereinafter as brake elements 18 or brake pads 18. The brake elements 18 mount to the caliper 14 in a manner known in the art. It will be appreciated that the brake system 10 is shown in a simplified fashion. As such, a more detailed explanation of an exemplary disc brake system is shown in commonly assigned United States Patent Number 4,351,421, which is hereby incorporated by reference in its entirety as if fully set forth herein.

Each of the brake elements 18 includes a structural backing 20 and a friction material 22. The friction material 22 mounts to the structural backing 20 using mechanical fasteners and/or chemical bonding (not shown). An example of one such mounting method is disclosed in commonly assigned United States Patent Number 5,073,099, which is hereby incorporated by reference in its entirety as if fully set forth herein.

The brake elements 18 squeeze against rotor 12 to slow the rotation of the rotor 12 to thereby slow the vehicle (not shown) to a desired speed. As noted above, friction is produced when the brake elements 18 come into contact with the rotor 12; this in turn, causes the brake elements 18 to heat and ultimately wear. It will be appreciated that the above description is also applicable to a drum brake configuration, a clutch lining configuration and other non-vehicle configurations, for example, slowing machine parts.

The friction material 22 can be comprised of various suitable materials that may be combined in a slurry form, for example, and pressed and/or molded into a desired shape. The friction material 22 can include iron fibers, aluminum, tin and/or combination thereof in relatively greater amounts by volume when compared to traditional friction materials. Notwithstanding other friction material components, the friction material 22 is devoid of elemental copper. Aluminum and/or tin in fiber and/or powder form may be included in a composition of the friction material 22 in combination or in lieu of the iron fibers as a percentage of volume.

Exemplary formulations of the friction material 22 are free of elemental copper and may still provide performance and durability that is comparable to the traditional non-asbestos organic friction materials that contain copper. The exemplary formulations also provide an environmentally advantageous composition of the friction material 22 by being free of elemental copper and increasing the percentage by volume of iron fibers, aluminum, tin and/or combinations thereof. It will be appreciated that a sufficient amount of elemental copper may be used in the traditional friction material for purposes that include heat dissipation. Accordingly, it will be understood that the present invention may include an increased amount of the iron fibers, aluminum, tin, and/or combinations thereof to provide comparable functionality when compared to the traditional friction material having the elemental copper as a component of the friction material.

In one embodiment of the present invention, the friction material 22 includes about 1 percent by volume (v %) to about 10 v % of the iron fibers and free of elemental copper. More preferably, the present invention includes 2.5 v % of the iron fibers and is similarly devoid of elemental copper. The preferred percentage of the irons fibers and/or other components of the friction material 22, which are discussed later, provides optimal performance characteristics. It will be appreciated that adherence to the exact percentage of total volume per component is not required to maintain operability of the invention, but the deviation from the exact percentages may reduce performance of the friction material 22.

In other embodiments of the present invention, a length of the iron fibers can be in range of about one-quarter inch (about 0.64 mm) to about one-half inch (about 1.3 mm). The width of the iron fibers can be about 20 micrometers. By way of example, a length to width ratio of the iron fibers can be in a range between about 8 to 1 to about 65 to 1. It will be appreciated that adherence to the exact dimensions of the iron fibers is not required to maintain operability of the invention, but the deviation from the dimensions may reduce performance of the friction material 22. The iron fibers are commercially available from many vendors. One such exemplary supplier is Sunny Metal Inc. (Guangzhou, China)

In the present invention, the friction material 22 contains, in addition to the above-described iron fibers, about 1 v % to about 5 v % of aluminum, tin and/or combinations thereof. More preferably, the present invention includes 1 v % of aluminum, tin and/or combinations thereof. The aluminum, and/or tin may be added in a fiber and/or powder form. A length of the aluminum, and/or tin fibers is in range between about one-quarter inch (about 0.64 mm) and about one-half inch (about 1.3 mm). The width of the aluminum and/or tin fibers is in a range between about 20 micrometers and 80 micrometers. In powder form, the aluminum and/or tin powder has a nominal diameter of about 0.05 inches (about 1.5 millimeters or about 10 mesh). It will be appreciated that the aluminum and/or tin fibers and/or powder are commercially available from many vendors.

In other embodiments of the present invention, the friction material 22 includes about 4.5 v % of the iron fibers and is free of elemental copper. In another embodiment, the friction material 22 includes about 1 v % of the iron fibers and is substantially free of copper. In these embodiments, the iron fibers may be a pure iron fiber, such that the iron fibers are free of any carbon content. In these embodiments, the aluminum, tin and/or combinations thereof may be added in a fiber and/or powder form to the friction material 22 as above described. It will be appreciated that in the various embodiments of the present invention that iron fibers, aluminum, and/or tin may be used singularly or in combination with one another and may serve as a replacement for elemental copper.

Table 1 shows ranges of a first exemplary composition of the friction material 22 illustrating another embodiment of present invention. The values found in the column labeled "Exemplary Values" represent preferred valves of the components within the friction material 22.

**Table 1.**

| Exemplary Components of the Friction Material | Exemplary Values (percentage of total volume) |
|---|---|
| Phenolic Resin | about 20 |
| Rubber Dust | about 8 |
| Cashew Nut Shell Friction Dust | about 15 |
| Coke and/or Graphite | about 11 |
| Alumina | about 3 |
| Magnesium Oxide | about 4 |
| Antimony Sulfide | about 4 |
| Barytes | about 18 |
| Aramid Pulp | about 6 |
| Tin Powder | about 2 |
| Aluminum Fiber | about 3 |
| Iron Fiber | about 3 |
| Mineral Fiber | about 3 |

It will be appreciated that many vendors supply multiple commercially available mineral fibers suitable for use in the friction material 22. In the various embodiments of the present invention, one such exemplary mineral fiber is a Lapinus® Fiber, which is commercially available from Lapinus Fibres B.V. (Netherlands).

It will be appreciated that many vendors supply multiple commercially available metal sulfides and/or metal oxides suitable for use in the friction material 22. In the various embodiments of the present invention, exemplary metal sulfides include antimony sulfide, stannic sulfide, molybdenum disulfide and tin sulfide all of which are commercially available from various vendors.

It will be appreciated that many vendors supply multiple commercially available forms of the rubber dust, the cashew nut friction dust, the aluminum fiber and/or powder, tin fiber and/or powder and zinc fiber and/or powder for use in the friction material 22. In the various embodiments of the present invention, the above components are commercially available from various vendors.

It will be appreciated that many vendors supply multiple commercially available forms of zirconia for use in the friction material 22. In the various embodiments of the present invention, one such exemplary source for suitable commercially available zirconia is Morgan Technical Ceramics (Fairfield, NJ).

It will be appreciated that many vendors supply multiple commercially available forms of magnetite powder for use in the friction material 22. In the various embodiments of the present invention, one such exemplary source for suitable commercially available magnetite powder is Reade Advanced Materials (Pawtucket, RI).

It will be appreciated that many vendors supply multiple commercially available forms of alumina for use in the friction material 22. In the various embodiments of the present invention, one such exemplary source for suitable commercially available alumina is ALCOA.

It will be appreciated that many vendors supply multiple commercially available forms of barytes for use in the friction material 22. In the various embodiments of the present invention, one such exemplary source for suitable commercially available barytes is Cimbar Performance Minerals, Cartersville, GA.

It will be appreciated that many vendors supply multiple commercially available forms of graphite or coke suitable for use in the friction material 22. In the various embodiments of the present invention, one such exemplary source of suitable commercially available graphite or coke is from Asbury Carbons, Inc. (Asbury, NJ).

It will be appreciated that many vendors supply multiple commercially available aramid fibers and/or pulp suitable for use in the friction material 22. In the various embodiments of the present invention, one such exemplary source of suitable aramid fiber or pulp is DuPont (Richmond, VA).

In one embodiment of the present invention, the binder is a phenolic resin. The components of the friction material 22 are subjected to a surface treatment with a phenolic resin. The components subjected to such a surface treatment have an advantage that they can be easily mixed with other components when the friction material 22 is manufactured. In another embodiment, a silane coupling agent can be used in lieu of the phenolic resin. Further detail as to use and substitution of the phenolic resin, the silane coupling agent or other binders, is more fully discussed in commonly assigned United States Patent Number 6,670,408, issued December 30, 2003, which is hereby incorporated by reference in its entirety as if fully set forth herein.

## Claims

1. A braking element comprising:
a friction material including iron fibers, and at least one of an aluminum powder or fiber, tin, and a combination of aluminum powder or fiber and tin, wherein an amount of said iron fibers in said friction material is in a range between about 1 v % to about 10 v %; wherein any aluminum powder includes a largest diameter of about 1.5 mm, any aluminum fiber includes a length between about 0.64 mm and about 1.3 mm and a width in a range between about 20 micrometers and about 80 micrometers and an amount of at least one of said aluminum powder or fiber, said tin, and said combination aluminum powder or fiber and tin is in a range between about 1 v % to about 5 v %; and wherein said friction material is free of copper.

2. A braking element according to Claim 1 wherein said amount of said iron fibers is about 2.5 v %.

3. A braking element according to one of Claims 1 or 2 wherein said amount of at least one of said aluminum powder or fiber, said tin, and said combination aluminum powder or fiber and tin is about 1 v %.

4. A braking element according to Claim 1 wherein said friction material is free of elemental copper.

5. A braking element according to one of Claims 1 to 4, wherein a length of said iron fibers is in a range between about one-quarter inch (about 0.64 mm) and about one-half inch (about 1.3 mm).

6. A braking element according to one of Claims 1 to 5, wherein a width of said iron fibers is about 20 micrometers.

7. A braking element according to Claim 1, wherein said amount of said iron fibers is about 4.5 v %.

8. A braking element according to one of Claims 1 to 7, wherein a length-to-width ratio of the iron fibers ranges between about 8 to 1 to about 65 to 1.

9. A braking element according to Claim 1 comprising:
a friction material including iron fibers and at least one of aluminum powder or fiber, tin, and a combination of aluminum powder or fiber and tin, wherein any aluminum powder includes a largest diameter of about 1.5 mm, any aluminum fiber includes a length between about 0.64 mm and about 1.3 mm and a width in a range between about 20 micrometers and about 80 micrometers and an amount of at least one of said aluminum powder or fiber, said tin, and said combination aluminum powder or fiber and tin is about 1 v % and wherein an amount of said iron fibers in said friction material is about 2.5 v %; and wherein said friction material is free of elemental copper.

## Patentansprüche

1. Bremselement umfassend
einen Reibwerkstoff, der Eisenfasern und wenigstens einen der folgenden Bestandteile, nämlich ein Aluminiumpulver oder Aluminiumfasern, Zinn und eine Kombination aus Aluminiumpulver oder Aluminiumfasern und Zinn umfasst, wobei ein Anteil der Eisenfasern in dem Reibwerkstoff in einem Bereich von ungefähr 1 vol.% bis ungefähr 10 vol.% liegt, wobei jegliches Aluminiumpulver einen größten Durchmesser von ungefähr 1,5 mm umfasst und jegliche Aluminiumfasern eine Länge von ungefähr 0,64 mm bis ungefähr 1,3 mm und eine Breite in einem Bereich von ungefähr 20 Mikrometer bis ungefähr 80 Mikrometer aufweisen und eine Menge des wenigstens einen Bestandteils, nämlich des Aluminiumpulvers oder Aluminiumfasern, Zinn und der Kombination aus Aluminiumpulver oder Aluminiumfasern und Zinn, in einem Bereich von ungefähr 1 vol.% bis ungefähr 5 vol.% liegt, und wobei der Reibwerkstoff frei von Kupfer ist.

2. Bremselement gemäß Anspruch 1,
wobei die Menge an Eisenfasern ungefähr 2,5 vol.% beträgt.

3. Bremselement gemäß einem der Ansprüche 1 oder 2,
wobei die Menge wenigstens einen der folgenden Bestandteile, nämlich des Aluminiumpulvers oder der Aluminiumfasern, des Zinns und der Kombination von Aluminiumpulver oder Aluminiumfasern und Zinn, ungefähr 1 vol.% beträgt.

4. Bremselement gemäß Anspruch 1,
wobei der Reibwerkstoff frei von elementarem Kupfer ist.

5. Bremselement gemäß einem der Ansprüche 1 bis 4,
wobei die Eisenfasern eine Länge von ungefähr 0,25 Inch (ungefähr 0,64 mm) bis ungefähr 0,5 Inch (ungefähr 1,3 mm) beträgt.

6. Bremselement gemäß einem der Ansprüche 1 bis 5,
wobei die Breite der Eisenfasern ungefähr 20 Mikrometer beträgt.

7. Bremselement gemäß Anspruch 1,
wobei die Menge an Eisenfasern ungefähr 4,5 vol.% beträgt.

8. Bremselement gemäß einem der Ansprüche 1 bis 7,
wobei das Längen- zu Breitenverhältnis der Eisenfasern zwischen ungefähr 8 zu 1 bis ungefähr 65 zu 1 beträgt.

9. Bremselement gemäß Anspruch 1, umfassend
einen Reibwerkstoff, der Eisenfasern und wenigstens einen der folgenden Bestandteile, nämlich Aluminiumpulver oder Aluminiumfasern, Zinn und eine Kombination aus Aluminiumpulver oder Aluminiumfasern und Zinn, umfasst,
wobei jegliches Aluminiumpulver einen größten Durchmesser von ungefähr 1,5 mm, jegliche Aluminiumfasern eine Länge von ungefähr 0,64 mm bis ungefähr 1,3 mm und eine Breite ungefähr 20 Mikrometer bis ungefähr 80 Mikrometer aufweisen und eine Menge wenigstens einen der folgenden Bestandteile, nämlich des Aluminiumpulvers oder der Aluminiumfasern, des Zinns und die Kombination des Aluminiumpulvers oder Aluminiumfasern und Zinn, ungefähr 1 vol.% beträgt und wobei eine Menge der Eisenfasern in dem Reibwerkstoff ungefähr 2,5 vol.% beträgt und wobei der Reibwerkstoff frei von elementarem Kupfer ist.

## Revendications

1. Elément de freinage comprenant :
un matériau de frottement comprenant des fibres de fer, et au moins l'un d'une poudre ou fibre d'aluminium, d'étain et d'une combinaison de poudre ou fibre d'aluminium et d'étain, dans lequel une quantité desdites fibres de fer dans ledit matériau de frottement se trouve dans une plage entre environ 1 % en volume et environ 10 % en volume ; dans lequel le plus grand diamètre de n'importe quelle poudre d'aluminium est d'environ 1,5 mm, la longueur de n'importe quelle fibre d'aluminium est comprise entre environ 0,64 mm et environ 1,3 mm et la largeur de n'importe quelle fibre d'aluminium est comprise entre environ 20 µm et environ 80 µm, et une quantité d'au moins l'un de ladite poudre ou fibre d'aluminium, dudit étain et de ladite combinaison de poudre ou fibre d'aluminium et d'étain se trouve dans une plage entre environ 1 % en volume et environ 5 % en volume ; et dans lequel ledit matériau de frottement est dépourvu de cuivre.

2. Elément de freinage selon la revendication 1, dans lequel ladite quantité de fibres de fer est d'environ 2,5 % en volume.

3. Elément de freinage selon la revendication 1 ou 2, dans lequel ladite quantité de l'au moins un de ladite poudre ou fibre d'aluminium, dudit étain, et de ladite combinaison de poudre ou fibre d'aluminium et d'étain est d'environ 1 % en volume.

4. Elément de freinage selon la revendication 1, dans lequel ledit matériau de frottement est dépourvu de cuivre élémentaire.

5. Elément de freinage selon l'une des revendications 1 à 4, dans lequel une longueur desdites fibres de fer se trouve dans une plage entre environ 0,64 mm (environ un quart de pouce) et environ 1,3 mm (environ un demi-pouce).

6. Elément de freinage selon l'une des revendications 1 à 5, dans lequel une largeur desdites fibres de fer est d'environ 20 µm.

7. Elément de freinage selon la revendication 1, dans lequel ladite quantité desdites fibres de fer est d'environ 4,5 % en volume.

8. Elément de freinage selon l'une des revendications 1 à 7, dans lequel un rapport de la longueur sur la largeur des fibres de faire est compris entre environ 8:1 et environ 65:1.

9. Elément de freinage selon la revendication 1, comprenant :
un matériau de frottement comprenant des fibres de fer, et au moins l'un d'une poudre ou fibre d'aluminium, d'étain et d'une combinaison de poudre ou fibre d'aluminium et d'étain, dans lequel le plus grand diamètre de n'importe quelle poudre d'aluminium est d'environ 1,5 mm, la longueur de n'importe quelle fibre d'aluminium est comprise entre environ 0,64 mm et environ 1,3 mm et la largeur de n'importe quelle fibre d'aluminium est comprise entre environ 20 µm et environ 80 µm, et une quantité d'au moins l'un de ladite poudre ou fibre d'aluminium, dudit étain et de ladite combinaison de poudre ou fibre d'aluminium et d'étain est d'environ 1 % en volume ; et dans lequel une quantité desdites fibres de fer dans ledit matériau de frottement est d'environ 2,5 % en volume ; et dans lequel ledit matériau de frottement est dépourvu de cuivre élémentaire.
